# EUROPEAN PATENT APPLICATION

(11) **EP 2 381 670 A1**
(43) Date of publication of application: **26.10.2011**
(21) Application number: 11003687.8
(22) Date of filing: 20.03.2008
(51) Int. Cl.: H04N 1/54

(54) **A printing process**

(30) Priority: 22.03.2007 GB 0705513
(62) Divisional of application: 08251031.4
(71) Applicant: LFH Brand Identity Consultants Limited, London W1F OUT (GB)
(72) Inventor: Hawkins, Graham, London, W1F 0UT (GB)
(74) Representative: Evans, Claire

(57) **Abstract**

A process for use in printing branding, the process comprising the steps of:
a. identifying the colours used in the branding
b. specifying the required colours, and
c. determining the minimum number of colours which can be used to form a palette of colours which can be mixed to obtain the required colours to within a specified tolerance.

## Description

The invention relates to a printing process, particularly a process for use in printing branding such as branded packaging.

Standard printing (eg, all magazine printing) uses four standard printing inks called 'process colours'. These process colours are cyan, magenta, yellow and black, and they are mixed to produce the standard 'process' range of colours.

'Spot colours' are non-process colours, that is, colours which cannot be formed from the four standard printing inks. They are normally specified in colour systems such as the Pantone system, which consists of 1,114 predetermined selectable colours. However, sometimes a spot colour may be specifically developed on a bespoke basis.

Designers use spot colours for extra visual impact. Spot colours are often chosen for use as 'brand colours' in branding, that is, the colours which define a brand and help it to be differentiated from other brands, as they are less common than the process range of colours. However, the ink for each spot colour must be ordered separately. This means that many different printing inks often required when printing branding, thereby increasing costs.

It is an object of the invention to seek to reduce the costs of printing branding.

The invention provides a process for use in printing branding, the process comprising the steps of:
a) identifying the colours used in the branding,
b) specifying the required colours, and
c) determining the minimum number of colours which can be used to form a palette of colours which can be mixed to obtain the required colours to within a specified tolerance.

These colours are called the 'palette' colours.

Once the colours in the branding have been identified, they may be listed in order of decreasing importance to the branding.

The colours which are allocated primary importance may be the colours which define the brand. These are called the 'brand colours'. They are usually spot colours.

The colours which are allocated secondary importance may be the colours which are used in the text of the branding. These are called the 'brand text colours'. They are also usually spot colours.

The colours which are allocated tertiary importance may be the colours which are used in the general text and colour ways. These colours are usually spot colours, but this is not always the case.

The colours which are used in the graphical elements of the branding may be allocated either primary or secondary importance. These are called the 'graphical colours'. They are often colours from the process range of colours, but this is not always the case.

The step of determining the minimum number of palette colours may comprise selecting a group of possible spot colours and a group of possible process colours and testing possible combinations of these colours to see how closely it is possible to match the required colours to within the specified tolerance.

Priority may be given to the most important colours. By including the most important colours in the palette, it becomes possible to achieve the closest match for those colours.

The most important spot colours will usually be brand colours. These are the colours for which it is particularly important to achieve a close match. Four spot colours are usually selected.

The most important process colours will be those colours which must be mixed to obtain the graphical colours identified in the branding. Three or four process colours are usually selected.

The spot colours selected may be altered to take into account the process colours which have been selected.

The step of selecting two groups of possible spot colours and process colours and testing possible combinations of those colours may be repeated until the required colours are matched to within the specified tolerance. The results of previous tests may be taken into account to allow the colours selected to be refined.

The list of required colours will usually correspond substantially to the list of identified colours. However, the required colours may be altered during the step of determining the minimum number of palette colours. The required colours may be altered according to their order of importance in the list of identified colours. Thus, if necessary, one or more of the less important colours may be approximated or omitted if it seems that the inclusion of those colours will make it difficult to minimise the number of palette colours. The required colours may also be altered according to the difficulty in obtaining the colours. Thus, if necessary, one or more colours may be approximated or omitted if it is difficult to obtain, either because of the number of suppliers involved or the substrates and printing processes required. Usually, it will only become apparent that the list of required colours requires alteration once one or more groups of possible palette colours have been already tested.

The invention will now be illustrated, by reference to the following example of the invention.

An audit was carried out of all the brands and the range of packaging using those brands for a particular company. This was done by viewing the artwork for each type of branding or packaging. Each artwork records the different process and spot colours for that item in electronic form.

A first print run of colours identified in the audit was then carried out, and the printed colours were checked against the colours on approved current packaging using spectrography to ensure that the colours listed in the artwork match the approved colours.

The different colours used in the branding / packaging were then reviewed visually to assess the distinct brand colours. These are the colours which define the brand, and which need to be reproduced accurately and in printable form.

The different text colours and the graphical colours were also reviewed visually.

The colours were then listed in order of priority, starting with the brand colours, followed by the brand text colours and then the colours used in the general text and colour ways. The graphical colours may be listed with the brand colours or with the brand text colours, depending on their importance to the branding. The brand and brand text colours are usually spot colours, whereas the graphical colours are usually (but not always) in the process range of colours. The colours used in the general text and colour ways are usually spot colours, but again this is not always the case. The complexity of producing each colour is also listed (ie, the number of suppliers involved in obtaining the colour, and the substrates and print processes required).

Once the audit was complete, known software such as Gretag Macbeth Color Picker software was used to determine the minimum number of printing inks ('palette colours') which can be mixed to obtain the required colours.

A provisional palette of up to 8 colours was entered into the software as La^{o}b^{o} values. The La^{o}b^{o} value for any colour can be obtained using a spectrophotometer. The palette will usually consist of 4 spot colours and 3 or 4 process colours. The spot colours were selected from the brand and text colours which have been identified in the audit, with the brand colours being given priority. The process colours were selected based on the graphical colours which have been identified in the audit. These two are interdependent, and the spot colours selected may vary depending on the process colours which have been selected.

The software then calculates all the colours which can be obtained by mixing the palette colours. This is called the 'gamut'.

The software then compares each of the colours listed in the audit with the gamut to see how close a match can be obtained. For each colour, the software lists the various possible combinations of palette colours, together with a ΔE value, which indicates how close each combination is to the target colour.

Using this information, the user can then select a different set of palette colours to be tested by the software. This process can be repeated until a set of palette colours is obtained which will produce the required colours to within a specified maximum ΔE value.

If necessary, colours of low importance and/or high difficulty can be approximated or eliminated in order to assist in the choice of the palette colours.

Once the palette colours had been finalised, the palette was then profiled electronically on a press accurate proofing device to create the palette's gamut. The gamut was checked to ensure that it encapsulates all the required colours in a printable form, and, if necessary, fine tuned.

## Claims

1. A process for use in printing branding, the process comprising the steps of:
a. identifying the colours used in the branding
b. specifying the required colours, and
c. determining the minimum number of colours which can be used to form a palette of colours which can be mixed to obtain the required colours to within a specified tolerance.

2. A process according to claim 1, wherein the identified colours are listed in order of decreasing importance to the branding, the colours which are allocated primary importance optionally being the colours which define the brand, the colours which are allocated secondary importance optionally being the colours which are used in the text of the branding, the colours which are allocated tertiary importance optionally being the colours which are used in the general text and in the colour ways, the colours which are used in the graphical elements of the branding optionally being allocated either primary or secondary importance.

3. A process according to claim 1 or claim 2, wherein the step of determining the minimum number of palette colours comprises selecting a group of possible spot colours and a group of possible process colours and testing possible combinations of those colours to see how closely it is possible to match the required colours to within the specified tolerance, the spot colours optionally being selected from the spot colours which have been identified in the branding, priority optionally being given to the most important spot colours, the process colours optionally being selected from the process colours which must be mixed to obtain the graphical colours identified in the branding, priority optionally being given to the most important graphical colours.

4. A process according to claim 3, wherein the spot colours selected are altered to take into account the process colours which have been selected.

5. A process according to claim 3 or claim 4, wherein the step of selecting two possible groups of spot colours and process colours and testing possible combinations of those colours is repeated.

6. A process according to any preceding claim, wherein the required colours are altered during the step of determining the minimum number of palette colours.

7. A process according to any preceding claim, wherein the required colours are altered according to their order of importance, or the difficulty in obtaining the colours.

8. A process according to any preceding claim, wherein the branding is a range of branded packaging.

9. A process according to any preceding claim, wherein step a comprises identifying each of the inks presently used in printing the range of branded packaging by obtaining this information from the artwork for each item in the range of branded packaging.

10. A process according to any preceding claim, wherein step a is followed by a step which comprises selecting a palette of inks consisting of a group of possible spot inks and a group of possible process inks, and testing possible combinations of those inks to see how closely it is possible to match the colours of the identified links to within a specified tolerance.

11. A process according to any preceding claim, wherein step b comprises specifying the colours which are required to be reproduced when printing the range of branded packaging either by deciding that they should be the same as the colours of the identified inks or by omitting one of the inks or approximating one or more of the colours of the identified inks.

12. A process according to any preceding claim, wherein step c comprises selecting a palette of inks consisting of a group of possible spot inks and a group of possible process inks, and testing possible combinations of those inks to see how closely it is possible to match the required colours to within the specified tolerance, taking into account the results of the previous test when selecting the inks to be tested.

13. A process according to claim 12 when dependent on claim 11,
wherein step c is followed by a step which comprises repeating steps b and c until a palette of inks has been obtained which consists of the minimum number of inks which can be mixed to obtain the required colours to within the specified tolerance.

14. A process for use in printing a range of branded packaging, the process comprising the steps of:
a. identifying each of the inks presently used in printing the range of branded packaging by obtaining this information from the artwork for each item in the range of branded packaging;
b. listing the colours of the inks in order of decreasing importance to the brand, and specifying the complexity of producing each colour;
c. selecting a palette of inks consisting of a group of possible spot inks and a group of possible process inks, and testing possible combinations of those inks to see how closely it is possible to match the colours of the identified inks to within a specified tolerance;
d. specifying the colours which are required to be reproduced when printing the range of branded packaging either by deciding that they should be the same as the colours of the identified inks or by omitting one of the inks or approximating one or more of the colours of the identified inks, taking into account the importance of the colours to the brand and the complexity of producing each colour;
e. selecting a palette of inks consisting of a group of possible spot inks and a group of possible process inks, and testing possible combinations of those inks to see how closely it is possible to match the required colours to within the specified tolerance, taking into account the results of the previous test when selecting the inks to be tested; and
f. repeating steps d and e until a palette of inks has been obtained which consists of the minimum number of inks which can be can be mixed to obtain the required colours to within the specified tolerance.

15. A process for use in printing a range of branded packaging, the process comprising the steps of:
a. identifying each of the inks presently used in printing the range of branded packaging by obtaining this information from the artwork for each item in the range of branded packaging;
b. specifying the colours in the branded packaging which define the brand and the colours which are used in the graphical elements of the branded packaging;
c. selecting a palette of inks consisting of a group of possible spot inks and a group of possible process inks, and testing possible combinations of those inks to see how closely it is possible to match the colours of the identified inks to within a specified tolerance, the spot inks being selected from those spot inks which have colours which define the brand and the process inks being selected from those colours which may be mixed to obtain the graphical elements of the branded packaging;
d. specifying the colours which are required to be reproduced when printing the range of branded packaging either by deciding that they should be the same as the colours of the identified inks or by omitting one of the inks or approximating one or more of the colours of the identified inks,
e. selecting a palette of inks consisting of a group of possible spot inks and a group of possible process inks, and testing possible combinations of those inks to see how closely it is possible to match the required colours to within the specified tolerance, taking into account the results of the previous test when selecting the inks to be tested; and
f. repeating steps d and e until a palette of inks has been obtained which consists of the minimum number of inks which can be can be mixed to obtain the required colours to within the specified tolerance.
